# EUROPÄISCHE PATENTANMELDUNG

(11) **EP 1 579 954 A1**
(43) Veröffentlichungstag der Anmeldung: **28.09.2005**
(21) Anmeldenummer: 04007178.9
(22) Anmeldetag: 25.03.2004
(51) Int. Cl.: B24B 3/34, B24B 41/06

(54) **Stösselspannvorrichtung**

(71) Anmelder: WENDT GmbH, D-40670 Meerbusch (DE)
(72) Erfinder: Lamers, Norbert, 47445 Moers (DE)
(74) Vertreter: DR. STARK & PARTNER

(57) **Zusammenfassung**

Die Erfindung betrifft eine Stößelspannvorrichtung (1) zum Halten eines Werkstückes (6) während der Bearbeitung in einer Schleifvorrichtung, wobei die Materialbearbeitung mittels einer inbesondere in etwa schüsselförmig ausgebildeten Schleifscheibe erfolgt. Um eine Stößelspannvorrichtung (1) anzugeben, mit der eine Bearbeitung eines Werkstücks (6) auch dann möglich ist, wenn das Werkstück (6) hierzu in die Schleifscheibe hineingeschwenkt werden muss.

## Beschreibung

Die Erfindung betrifft eine Stößelspannvorrichtung zum Halten eines Werkstückes während der Bearbeitung in einer Schleifvorrichtung, wobei die Materialbearbeitung mittels einer insbesondere in etwa schüsselförmig ausgebildeten Schleifscheibe erfolgt.

Aus der Praxis sind derartige Stößelspannvorrichtungen bekannt. Dabei wird das zu bearbeitende Werkstück zwischen zwei Stößeln klemmend gehalten, und die Stößelspannvorrichtung ist als eine aufwändige Einrichtung mit einer hohen Baugröße ausgebildet. Sowohl der Antrieb für die rotatorische Ausrichtung des klemmend gehaltenen Werkstücks als auch die Betätigungsvorrichtung für die Spannkraft sind dabei auf einer Seite der Stößelspannvorrichtung angeordnet, wobei die Spannkraft mittels eines Übertragungselementes auf die andere Seite weitergeleitet wird und dort durch eine Wippenkonstruktion momentenfrei umgeleitet wird, um eine spannkraftbedingte Aufweitung der Stößelspannvorrichtung zu vermeiden.

Nachteilig hierbei ist, dass solche vorbekannten Stößelspannvorrichtungen aufgrund ihrer Größe nur begrenzt verschwenkt werden können, insbesondere kaum in eine schüsselförmige Schleifscheibe hineingeschwenkt werden können, da der zur Verfügung stehende Platz relativ begrenzt ist und ein Kontakt zwischen Stößelspannvorrichtung und Schleifscheibenflansch nicht erfolgen darf.

Insofern müssen derartige vorbekannte Stößelspannvorrichtungen, sofern alle Bereiche eines Werkstücks in einer Aufspannung bearbeitet werden sollen, auf einem entsprechend langem Achsweg verlagert werden, um dann an der gegenüberliegenden Kante der Schleifscheibe die erforderliche Bearbeitung durchzuführen, da dort die gewünschte Verschwenkung ohne Kollision möglich ist. Aufgrund der langen Verfahrwege ist die Bearbeitung mittels einer solchen Vorrichtung zeitaufwändig und die langen Achswege verursachen eine Verringerung der Steifigkeit der Bearbeitungsvorrichtung, was zu verschlechterten Bearbeitungsergebnissen führt.

Aufgabe der Erfindung ist es, die vorgenannten Nachteile zu vermeiden und eine Stößelspannvorrichtung anzugeben, mit der eine Bearbeitung eines Werkstücks auch dann möglich ist, wenn das Werkstück hierzu in die Schleifscheibe hineingeschwenkt werden muss.

Diese Aufgabe wird gelöst durch eine Stößelspannvorrichtung zum Halten eines Werkstückes während der Bearbeitung in einer Schleifvorrichtung, wobei die Materialbearbeitung mittels einer insbesondere in etwa schüsselförmig ausgebildeten Schleifscheibe erfolgt, wobei folgende Merkmale kennzeichnend sind:
a) die Stößelspannvorrichtung weist ein in etwa C-förmiges Halteelement mit endseitig jeweils in dieselbe Richtung abgewinkelten Haltebereichen auf,
b) durch den einen Haltebereich des Halteelements ist ein Spannstößel durchgeführt,
c) die relative Position von Spannstößel und Halteelement ist zur translatorischen Klemmung in einer translatorischen Bewegungsrichtung (A) kraftbeaufschlagt veränderbar,
d) der Spannstößel ist zur rotatorischen Ausrichtung des Werkstücks mittels entsprechender Stellglieder in seiner Ausrichtung rotatorisch veränderbar,
e) die Stellglieder sind durch eine Steuereinrichtung ansteuerbar,
f) an dem anderen Haltebereich des Halteelements ist ein Anlagestößel vorgesehen, der eine Drehlagerung als Widerlager für das durch den Spannstößel angepresste Werkstück beinhaltet,
g) die Drehlagerung weist eine im wesentlichen rotationssymmetrische konkave Lagerschale sowie ein auf dieser angeordnetes und mit dieser zusammenwirkendes, im Wesentlichen rotationssymmetrisches konvexes Lagerelement auf,
h) sowohl Lagerschale als auch Lagerelement sind derart angeordnet, dass die jeweiligen, durch den Rotationsmittelpunkt von Lagerschale bzw. Lagerelement gehenden Senkrechten auf der Fläche von Lagerschale bzw. Lagerelement in diesem Bereich in unbelastetem Zustand mit der translatorischen Bewegungsrichtung (A) fluchten, und
i) die Stößelspannvorrichtung ist gegenüber der Schleifscheibe klein ausgebildet (Halteelement-Länge z.B. ca. 6 bis 10 cm, insbesondere ca. 8 cm).

Hierdurch kann die Stößelspannvorrichtung mit dem darin eingespannten Werkstück nahezu beliebig gegenüber der Schleifscheibe verschwenkt werden, ohne dass es zu Kollisionen zwischen der Schleifscheibe und der Stößelspannvorrichtung kommt. Insofern lassen sich auch Schleifarbeiten an unterschiedlichsten Bereichen des in der Stößelspannvorrichtung eingespannten Werkstücks durchführen, ohne mit der Stößelspannvorrichtung gegenüber der Schleifscheibe längere Achswege verfahren zu müssen.

Zudem ist eine momentenfreie Kraftübertragung möglich, wodurch stabilisierende Bauteile oder eine aufwändige Kraftführung nicht erforderlich sind.

Die Stabilität und Steifigkeit der gesamten Vorrichtung kann mithin gesteigert werden, was bessere Bearbeitungsergebnissen bewirkt und den für die Bearbeitung erforderlichen Zeitaufwand verringert. Durch die geringere Baugröße kann eine hohe Steifigkeit mit deutlich geringerem Materialeinsatz erzielt werden, so dass die Kosten für eine solche Vorrichtung deutlich reduziert sind.

Vorzugsweise kann das Lagerelement als ein kappenförmiges Kugelsegment mit einem solchen Krümmungsradius ausgeführt sein, dass der Mittelpunkt einer in seiner Krümmung dem Kugelsegment entsprechend vollständigen Kugel in etwa der Werkstückmitte, bezogen auf die Berührpunkte Spannstößel/Werkstück und Drehlagerung/Werkstück, entspricht. Auch kann das Lagerelement als ein zylinderförmiges oder kegelförmiges Kugelsegment mit entsprechend gewölbter oberer Stirnfläche ausgebildet sein.

Dabei kann der Krümmungsradius der Lagerschale leicht kleiner sein als der Krümmungsradius des Lagerelementes, so dass ein in etwa ringförmiger Kontakt im äußeren Bereich gegeben ist. Insoweit bildet sich im mittleren Bereich eine kleine Schmiertasche aus und die zentrierende Wirkung ist vergrößert.

Erfindungsgemäß kann die Lagerschale die dem Werkstück abgewandte Seite der Drehlagerung und das Lagerelement die dem Werkstück zugewandte Seite der Drehlagerung bilden, es ist aber auch die umgekehrte Anordnung der Drehlagerbauteile möglich.

Vorteilhafterweise kann das Lagerelement durch eine Schlauchsicherung oder dergleichen gegen unbeabsichtigtes Lösen gesichert sein, so dass ohne aufwändige und teure Bauteile eine gute Funktionalität gewährleistet ist. Aufgrund der eher geringen Drehbewegungen des Drehlagers ist eine solche Sicherung vollständig ausreichend. Insbesondere kann die Sicherung ein Schrumpfschlauchsegment sein.

Hierbei kann das Lagerelement sich oberseitig leicht verjüngend ausgebildet sein, wodurch bei Verwendung einer Schlauchsicherung oder dergleichen eine nochmals bessere Sicherung gegen unbeabsichtigtes Lösen gegeben ist.

Bei einem bevorzugten Ausführungsbeispiel kann der Stößeldurchmesser sehr klein ausgebildet sein, insbesondere nur wenige Millimeter betragen, so dass auch Werkstücke mit geringen Dimensionen, z. B. Schneidplatten mit einem Innenkreis von nur wenigen Millimetern, problemlos bearbeitet werden können.

Erfindungsgemäß kann das Lagerelement eine höhere Härte haben als die Lagerschale, so dass ein Verschleiß eher an der Lagerschale auftritt als an der Lagerschale. Insofern können Materialpaarungen wie Lagerelement aus gehärtetem Stahl oder Hartmetall auf einer Lagerschale aus Stahl besonders vorgesehen sein.

Auch können das Lagerelement und die Lagerschale aus einem übereinstimmenden Material, wie z. B. Hartmetall, bestehen, so dass ein verstärkter Verschleiß oder gar Fressen auf einem Teilbereich oder einem Element der Lagerung vermieden wird.

Vorteilhafterweise kann für die translatorische Klemmung des Werkstücks das Halteelement in translatorischer Richtung ortsfest angeordnet sein, der Spannstößel gegenüber dem Halteelement kraftbeaufschlagt auslenkbar ausgebildet sein und eine den Spannstößel insbesondere gegen eine Rückstellkraft in Richtung der Lagerschale drückende Auslenkeinrichtung für die Kraftbeaufschlagung des Spannstößels vorgesehen sein.

Auch kann für die translatorische Klemmung des Werkstücks das Halteelement in translatorischer Richtung ortsfest angeordnet sein, der Spannstößel gegenüber dem Halteelement gegen eine den Spannstößel in Richtung der Lagerschale drückende, insbesondere als Feder ausgebildete Kraftbeaufschlagungseinrichtung kraftbeaufschlagt auslenkbar ausgebildet sein und sowie eine den Spannstößels gegen die Kraftbeauschlagung auslenkende Auslenkeinrichtung für das zeitweise Lösen der Klemmung des Spannstößels vorgesehen sein, so dass eine aufwändige Konstruktion für eine durch die Antriebsachse durchgeführte Kraftbeaufschlagung vermieden wird.

Alternativ kann für die translatorische Klemmung des Werkstücks der Spannstößel in translatorischer Richtung ortsfest angeordnet sein, das Halteelement gegenüber dem Spannstößel kraftbeaufschlagt auslenkbar ausgebildet sein und eine das Halteelement insbesondere gegen eine Rückstellkraft in Richtung des Spannstößels drückende Auslenkeinrichtung für die Kraftbeaufschlagung des Halteelements vorgesehen sein.

Auch kann für die translatorische Klemmung des Werkstücks der Spannstößel in translatorischer Richtung ortsfest angeordnet sein, das Halteelement gegenüber dem Spannstößel gegen eine das Halteelement in Richtung des Spannstößels drückende, insbesondere als Feder ausgebildete Kraftbeaufschlagungseinrichtung kraftbeaufschlagt auslenkbar ausgebildet sein und sowie eine das Halteelement gegen die Kraftbeauschlagung auslenkende Auslenkeinrichtung für das zeitweise Lösen der Klemmung des Halteelements vorgesehen sein.

Dabei kann die Auslenkeinrichtung als Teil der Antriebsachse des Spannstößels ausgebildet sein.

Auch kann die Auslenkeinrichtung als ein wenigstens einen vorspringenden Bereich des zu verlagernden Bauteils hintergreifender Hebel oder dergleichen ausgebildet sein, so dass mit einem einfachen technischen Aufbau eine robuste und funktionelle Konstruktion der Auslenkeinrichtung möglich ist.

Hierbei kann der Hebel in etwa gabelförmig ausgebildet sein und mit zwei vorstehend ausgebildeten seitlichen Bereichen entsprechende seitliche Vorsprünge des zu verlagernden Bauteils hintergreifen, und es können vorzugsweise die Vorsprünge auf Höhe der Achse des zu verlagernden Bauteils, d. h. des Spannstößels bzw. des Halteelements, einander gegenüberliegend vorgesehen sein, so dass durch eine momentfreie Kraftübertragung ein Verkanten oder dergleichen vermieden wird und die bereits vorerwähnten kleinen Abmaße des erfindungsgemäßen Gegenstandes möglich werden.

Dabei kann die Gabel insbesondere auf der Seite des Halteelements angreifen, die der Anlageseite der Stößelspannvorrichtung zugewandt ist.

Bei einem bevorzugten Ausführungsbeispiel kann der Spannstößel zur Erhöhung der Flächenpressung an seiner Kontaktfläche zur Klemmung des Werkstückes zumindest eine Ausnehmung aufweisen, so dass das durch Reibung übertragbare Moment zur Drehung des Werkstücks größer ist und Schlupf zwischen Spannstößel und Werkstück sicher vermieden wird. Die Drehung erfolgt somit sicher in der Drehlagerung und tritt nicht am Kontakt zwischen Werkstück und Spannstößel auf. Die Kontaktfläche des Spannstößels kann dabei insbesondere mit einer innenseitigen, einen vorstehenden ringförmigen Bereich bildenden Vertiefung versehen sein.

Die Erfindung betrifft auch eine Schleifvorrichtung, wobei die Materialbearbeitung mittels einer insbesondere in etwa schüsselförmig ausgebildeten Schleifscheibe erfolgt, mit einer Stößelspannvorrichtung zum Halten eines Werkstückes während der Bearbeitung.

Die Nachteile der aus dem Stand der Technik vorbekannten Schleifvorrichtungen sind bereits eingangs beschrieben worden und werden durch eine Schleifvorrichtung vermieden, die mit einer Stößelspannvorrichtung der vorbeschrieben Art versehen ist.

Im Folgenden wird ein in der Zeichnung dargestelltes Ausführungsbeispiel der Erfindung erläutert. Es zeigen:
- Fig. 1: eine teilweise im Schnitt dargestellte Seitenansicht einer erfindungsgemäßen Stößelspannvorrichtung,
- Fig. 2: den Gegenstand nach Fig. 1 in einer teilgeschnittenen Draufsicht,
- Fig. 3: eine Spannvorrichtung gemäß dem Stand der Technik, und
- Fig. 4 u. 5: schematisiert dargestellte Spannvorrichtungen gemäß der Erfindung.

In allen Figuren werden für gleiche bzw. gleichartige Bauteile übereinstimmende Bezugszeichen verwendet.

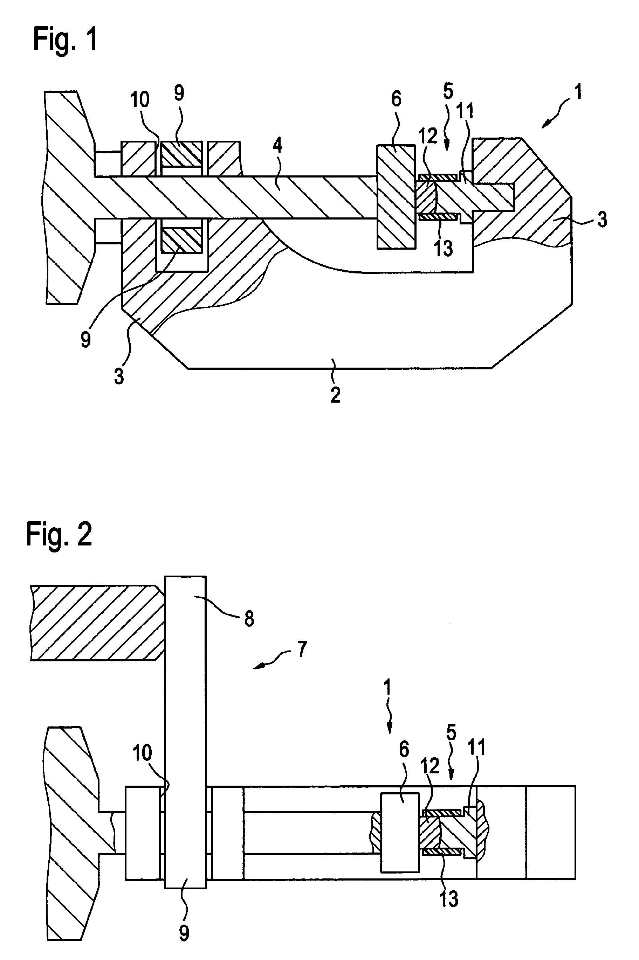

Fig. 1 zeigt in teilgeschnittener Darstellung eines Ausführungsbeispiel einer erfindungsgemäßen Stößelspannvorrichtung 1 für ein Werkstück 6.

Die Stößelspannvorrichtung 1 weist dabei ein in etwa C-förmiges Halteelement 2 auf, das mit endseitig jeweils in dieselbe Richtung abgewinkelten Haltebereichen 3 versehen ist.

Durch den einen Haltebereich 3 des Halteelements 2 ist ein Spannstößel 4 durchgeführt und an dem anderen Haltebereich 3 des Halteelements 2 ist eine Drehlagerung 5 als Widerlager für das durch den Spannstößel 4 angepresste Werkstück 6 vorgesehen, wobei die relative Position von Spannstößel 4 und Halteelement 2 zur translatorischen Klemmung kraftbeaufschlagt veränderbar ist.

Im dargestellten Ausführungsbeispiel ist für die translatorische Klemmung des Werkstücks 6 der Spannstößel 4 in translatorischer Richtung ortsfest angeordnet, das Halteelement 2 ist gegenüber dem Spannstößel 4 kraftbeaufschlagt auslenkbar ausgebildet und eine das Halteelement 2 in Richtung des Spannstößels 4 drückende Auslenkeinrichtung 7 ist für die Kraftbeaufschlagung des Halteelements 2 vorgesehen.

Wie aus Fig. 2 ersichtlich ist die Auslenkeinrichtung 7 dabei ein in etwa gabelförmiger Hebel 8 mit zwei vorstehend ausgebildeten seitlichen Bereichen 9, wobei die seitlichen Bereiche 9 entsprechende seitliche, als Teilbereich einer Nut ausgebildete Vorsprünge 10 des zu verlagernden Halteelements 2 hintergreifen. Durch die in der Zeichnung dargestellte nutförmige Ausbildung kann mittels der Auslenkeinrichtung 7 auch das Lösen der Klemmung und der Öffnungsgrad der Stößelspannvorrichtung 1 zu Einsetzen oder Entnehmen des Werkstücks 6 entsprechend eingestellt werden.

Dabei übernimmt der gabelförmige Hebel 8 zusammen mit dem C-förmigen Halteelement 2 in dieser Variante die Funktion des zum Spannen verlagerbaren Spannstößels und der Spannstößel 4 fungiert als in Bezug auf den Antrieb relativ nicht verlagerbares Gegenlager.

Der Spannstößel 4 ist zur rotatorischen Ausrichtung des Werkstücks 6 mittels entsprechender, in der Zeichnung nicht dargestellter Stellglieder in seiner Ausrichtung rotatorisch veränderbar.

Die Drehlagerung 5 weist eine im Wesentlichen rotationssymmetrische konkave Lagerschale 11 sowie ein auf dieser angeordnetes und mit dieser zusammenwirkendes, im Wesentlichen rotationssymmetrisches konvexes Lagerelement 12 auf, wobei sowohl Lagerschale 11 als auch Lagerelement 12 derart angeordnet sind, dass die jeweilige Senkrechte auf der Fläche von Lagerschale 11 bzw. Lagerelement 12 in dem Rotationsmittelpunkt von Lagerschale 11 bzw. Lagerelement 11 in unbelastetem Zustand mit der translatorischen Bewegungsrichtung (A) des Halteelements 2 fluchten. Eine Schlauchsicherung 13 in Form eines Schrumpfschlauches sichert die Lagerschale 12 gegen unbeabsichtigtes Lösen.

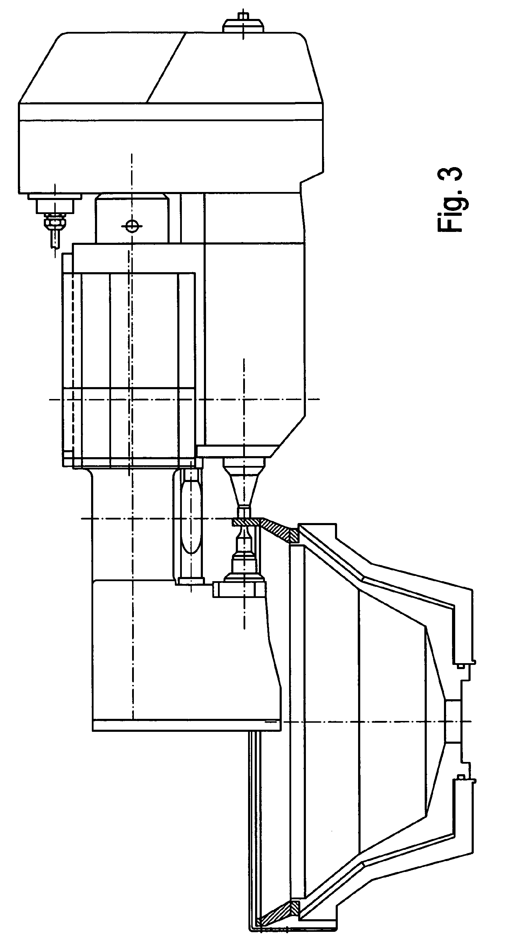

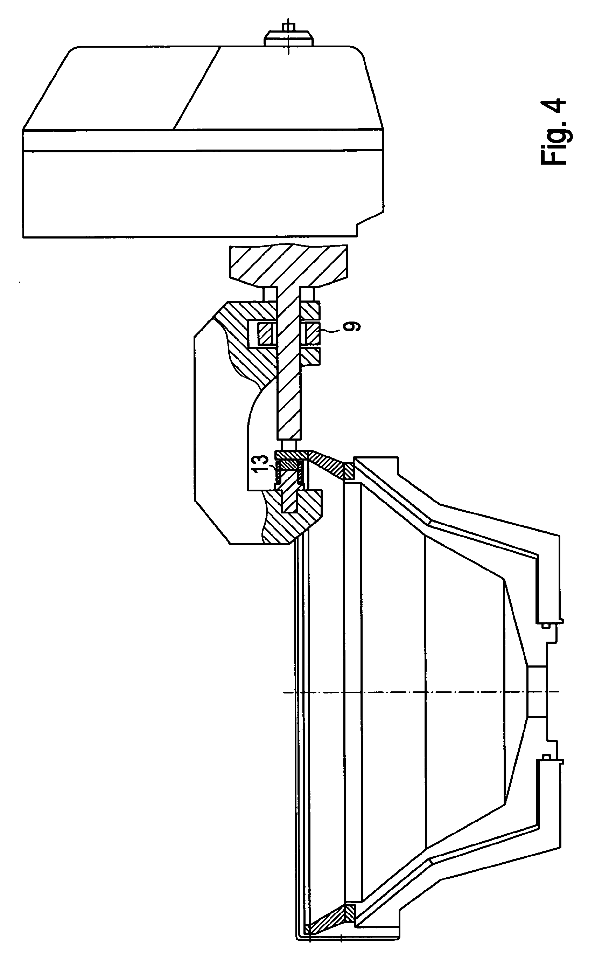

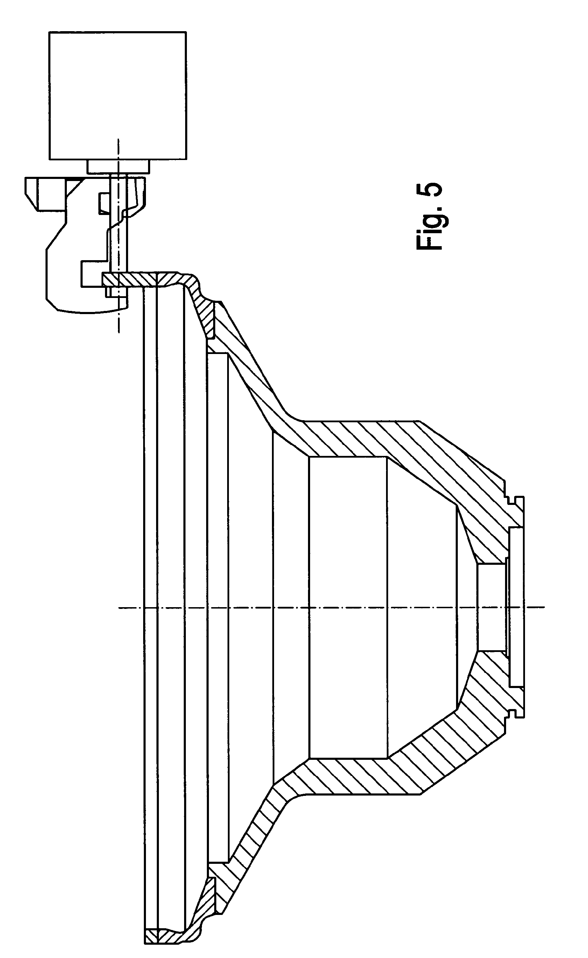

Anhand der Zeichnungsdarstellungen Fig. 3 und 4 sowie 5 lässt sich die Reduktion der Baugröße einer erfindungsgemäßen Stößelspannvorrichtung (Fig. 4 und 5) gegenüber einer Stößelspannvorrichtung nach dem Stand der Technik (Fig. 3) gut erkennen.

## Patentansprüche

1. Stößelspannvorrichtung (1) zum Halten eines Werkstückes (6) während der Bearbeitung in einer Schleifvorrichtung, wobei die Materialbearbeitung mittels einer insbesondere in etwa schüsselförmig ausgebildeten Schleifscheibe erfolgt, **gekennzeichnet durch** folgende Merkmale:
a) die Stößelspannvorrichtung (1) weist ein in etwa C-förmiges Halteelement (2) mit endseitig jeweils in dieselbe Richtung abgewinkelten Haltebereichen (3) auf,
b) **durch** den einen Haltebereich (3) des Halteelements (2) ist ein Spannstößel (4) durchgeführt,
c) die relative Position von Spannstößel (4) und Halteelement (2) ist zur translatorischen Klemmung in einer translatorischen Bewegungsrichtung (A) kraftbeaufschlagt veränderbar,
d) der Spannstößel (4) ist zur rotatorischen Ausrichtung des Werkstücks (6) mittels entsprechender Stellglieder in seiner Ausrichtung rotatorisch veränderbar,
e) die Stellglieder sind **durch** eine Steuereinrichtung ansteuerbar,
f) an dem anderen Haltebereich (3) des Halteelements (2) ist ein Anlagestößel vorgesehen, der eine Drehlagerung (5) als Widerlager für das **durch** den Spannstößel (4) angepresste Werkstück (6) beinhaltet,
g) die Drehlagerung (5) weist eine im Wesentlichen rotationssymmetrische konkave Lagerschale (11) sowie ein auf dieser angeordnetes und mit dieser zusammenwirkendes, im Wesentlichen rotationssymmetrisches konvexes Lagerelement (12) auf,
h) sowohl Lagerschale (11) als auch Lagerelement (12) sind derart angeordnet, dass die jeweiligen, **durch** den Rotationsmittelpunkt von Lagerschale (11) bzw. Lagerelement (12) gehenden Senkrechten auf der Fläche von Lagerschale (11) bzw. Lagerelement (12) in diesem Bereich in unbelastetem Zustand mit der translatorischen Bewegungsrichtung (A) fluchten, und
i) die Stößelspannvorrichtung (1) ist gegenüber der Schleifscheibe klein ausgebildet.

2. Stößelspannvorrichtung (1) nach Anspruch 1, **dadurch gekennzeichnet, dass** das Lagerelement (12) als ein kappenförmiges Kugelsegment mit einem solchen Krümmungsradius ausgeführt ist, dass der Mittelpunkt einer in seiner Krümmung dem Kugelsegment entsprechend vollständigen Kugel in etwa der Werkstückmitte, bezogen auf die Berührpunkte Spannstößel/Werkstück und Drehlagerung/Werkstück, entspricht.

3. Stößelspannvorrichtung nach Anspruch 1 oder 2, **dadurch gekennzeichnet, dass** der Krümmungsradius der Lagerschale (11) leicht kleiner ist als der Krümmungsradius des Lagerelementes (12).

4. Stößelspannvorrichtung (1) nach einem der Ansprüche 1 bis 3, **dadurch gekennzeichnet, dass** die Lagerschale (11) die dem Werkstück (6) abgewandte Seite der Drehlagerung (5) und das Lagerelement (12) die dem Werkstück (6) zugewandte Seite der Drehlagerung (5) bildet.

5. Stößelspannvorrichtung (1) nach einem Anspruch 4, **dadurch gekennzeichnet, dass** das Lagerelement (12) sich oberseitig leicht verjüngend ausgebildet ist.

6. Stößelspannvorrichtung (1) nach einem der Ansprüche 1 bis 5, **dadurch gekennzeichnet, dass** das Lagerelement (12) durch eine Schlauchsicherung (13) oder dergleichen gegen unbeabsichtigtes Lösen gesichert ist.

7. Stößelspannvorrichtung nach einem der Ansprüche 1 bis 6, **dadurch gekennzeichnet, dass** der Stößeldurchmesser sehr klein ausgebildet ist, insbesondere nur wenige Millimeter beträgt.

8. Stößelspannvorrichtung nach einem der Ansprüche 1 bis 7, **dadurch gekennzeichnet, dass** das Lagerelement (12) eine höhere Härte hat als die Lagerschale (11).

9. Stößelspannvorrichtung (1) nach einem der Ansprüche 1 bis 8, **dadurch gekennzeichnet, dass** für die translatorische Klemmung des Werkstücks (5) das Halteelement (2) in translatorischer Richtung ortsfest angeordnet ist, der Spannstößel (4) gegenüber dem Halteelement (2) kraftbeaufschlagt auslenkbar ausgebildet ist und eine den Spannstößel (4) insbesondere gegen eine Rückstellkraft in Richtung der Lagerschale (11) drückende Auslenkeinrichtung für die Kraftbeaufschlagung des Spannstößels (4) vorgesehen ist.

10. Stößelspannvorrichtung (1) nach einem der Ansprüche 1 bis 8, **dadurch gekennzeichnet, dass** für die translatorische Klemmung des Werkstücks (6) das Halteelement (2) in translatorischer Richtung ortsfest angeordnet ist, der Spannstößel (4) gegenüber dem Halteelement (2) gegen eine den Spannstößel (4) in Richtung der Lagerschale (11) drückende, insbesondere als Feder ausgebildete Kraftbeaufschlagungseinrichtung kraftbeaufschlagt auslenkbar ausgebildet ist und sowie eine den Spannstößels (11) gegen die Kraftbeauschlagung auslenkende Auslenkeinrichtung (7) für das zeitweise Lösen der Klemmung des Spannstößels (4) vorgesehen ist.

11. Stößelspannvorrichtung nach einem der Ansprüche 1 bis 8, **dadurch gekennzeichnet, dass** für die translatorische Klemmung des Werkstücks (6) der Spannstößel (4) in translatorischer Richtung ortsfest angeordnet ist, das Halteelement (2) gegenüber dem Spannstößel (4) kraftbeaufschlagt auslenkbar ausgebildet ist und eine das Halteelement (2) insbesondere gegen eine Rückstellkraft in Richtung des Spannstößels (4) drückende Auslenkeinrichtung (7) für die Kraftbeaufschlagung des Halteelements (2) vorgesehen ist.

12. Stößelspannvorrichtung (1) nach einem der Ansprüche 1 bis 8, **dadurch gekennzeichnet, dass** für die translatorische Klemmung des Werkstücks (6) der Spannstößel (4) in translatorischer Richtung ortsfest angeordnet ist, das Halteelement (2) gegenüber dem Spannstößel (4) gegen eine das Halteelement (2) in Richtung des Spannstößels (4) drückende, insbesondere als Feder ausgebildete Kraftbeaufschlagungseinrichtung kraftbeaufschlagt auslenkbar ausgebildet ist und sowie eine das Halteelement (2) gegen die Kraftbeauschlagung auslenkende Auslenkeinrichtung (7) für das zeitweise Lösen der Klemmung des Halteelements (2) vorgesehen ist.

13. Stößelspannvorrichtung (1) nach einem der Ansprüche 9 bis 12, **dadurch gekennzeichnet, dass** die Auslenkeinrichtung (7) als Teil der Antriebsachse des Spannstößels (4) ausgebildet ist.

14. Stößelspannvorrichtung (1) nach einem der Ansprüche 9 bis 12, **dadurch gekennzeichnet, dass** die Auslenkeinrichtung (7) als ein wenigstens einen vorspringenden Bereich (10) des zu verlagernden Bauteils hintergreifender Hebel (8) oder dergleichen ausgebildet ist.

15. Stößelspannvorrichtung (1) nach Anspruch 14, **dadurch gekennzeichnet, dass** der Hebel (8) in etwa gabelförmig ausgebildet ist und mit zwei vorstehend ausgebildeten seitlichen Bereichen (9) entsprechende seitliche Vorsprünge (10) des zu verlagernden Bauteils hintergreift.

16. Stößelspannvorrichtung (1) nach Anspruch 15, **dadurch gekennzeichnet, dass** die Vorsprünge (10) auf Höhe der Achse des zu verlagernden Bauteils einander gegenüberliegend vorgesehen sind.

17. Stößelspannvorrichtung (1) nach einem der Ansprüche 1 bis 16, **dadurch gekennzeichnet, dass** der Spannstößel (4) zur Erhöhung der Flächenpressung an seiner Kontaktfläche zur Klemmung des Werkstückes (6) zumindest eine Ausnehmung aufweist, insbesondere mit einer innenseitigen, einen vorstehenden ringförmigen Bereich bildenden Vertiefung versehen ist.

18. Schleifvorrichtung, wobei die Materialbearbeitung mittels einer insbesondere in etwa schüsselförmig ausgebildeten Schleifscheibe erfolgt, mit einer Stößelspannvorrichtung zum Halten eines Werkstückes während der Bearbeitung, **dadurch gekennzeichnet, dass** eine Stößelspannvorrichtung (1) nach einem der Ansprüche 1 bis 17 vorgesehen ist.
